# EUROPEAN PATENT SPECIFICATION

(11) **EP 0 908 068 B1**
(45) Date of publication and mention of the grant of the patent: **05.10.2005**
(21) Application number: 98901457.6
(22) Date of filing: 16.02.1998
(51) Int. Cl.: H04Q 7/30

(54) **A UNIVERSAL WIRELESS COMMUNICATION SYSTEM, A TRANSMISSION PROTOCOL, A WIRELESS COMMUNICATION STATION, AND A RADIO BASE STATION**
UNIVERSELLES SCHNURLOSES KOMMUNIKATIONSSYSTEM, ÜBERTRAGUNGSPROTOKOLL, SCHNURLOSE KOMMUNIKATIONSSTATION UND FUNK-BASISSTATION
SYSTEME UNIVERSEL DE RADIOCOMMUNICATION, PROTOCOLE D'EMISSION, STATION DE COMMUNICATION RADIO, ET STATION DE BASE RADIO

(30) Priority: 28.02.1997 EP 97400477
(43) Date of publication of application: 14.04.1999
(73) Proprietor: Koninklijke Philips Electronics N.V., 5621 BA Eindhoven (NL)
(72) Inventor: RAPELI, Juha, NL-5656 AA Eindhoven (NL)
(74) Representative: Deguelle, Wilhelmus H. G.
(86) International application number: PCT/IB1998/000193
(87) International publication number: WO 1998/038821

(56) References cited:
- WO-A-95/26598
- US-A- 5 276 907
- US-A- 5 430 889

## Description

The present invention relates to a universal wireless communication system in which an available radio frequency spectrum is divided among at least a first and a second wireless subsystem, the first wireless subsystem comprising at least a first radio base station and a first plurality of wireless communication stations, and the second wireless subsystem comprising at least a second radio base station and a second plurality of wireless communication stations, in at least one wireless subsystem one radio base station comprising means for identifying a wireless communication station of another wireless subsystem. Such a universal wireless communication system can comprise a plurality of wireless subsystems such as a terrestrial cellular or cordless radio system, a wireless local area network, a satellite system, or any other suitable wireless communication subsystem. The subsystems are able to operate independent of each other.

The present invention further relates to a transmission method, to a wireless communication station, and to a radio base station for use in such a system.

A universal wireless communication system of the above kind is generally known from many publications about universal wireless communication systems, e.g., from the article "Third Generation Mobile - UMTS and FPLMTS", D. MacFarlane, 7th World Telecommunication Forum, Technology Summit, Vol. 2, pp. 185-188, ITU, Geneva, 3-11 October 1995. In such a future system and also in existing systems where a number of operators of either a private or a public wireless subsystem share an available frequency band radio resources are becoming scarce so that there is a need to make an efficient use of such radio resources. On the other hand, from a commercial point of view inter alia, it is highly desirable to operate wireless communication stations in the system such that energising means comprised in such a wireless communication station are being used efficiently, i.e., given the environmental circumstances, the wireless communication station should use as less power as possible. If many subscribers are present in the various subsystems, a operating wireless communication station, signals transmitted by the stations on an RF carrier cause interference to signals on neighbouring RF carriers or radio bands. For making an efficient use of the available frequency spectrum, particularly at inter-subsystem-boundaries, it is thus highly desirable to operate the system such that an optimum is achieved as to reducing interference and an economic operation of wireless communication stations.

It is noted that US 5,430,889 discloses an automatic power control system for a mobile radio system. A plurality of base stations, each serving a cell, is linked to facilitate mutual communication between mobile units. The mobile units are arranged for transmitting an identification code, and a common sequence at a nominally different time within a transmission burst. Each base station has a correlator operative to discriminate, based on the sequences, between signals from mobile units within its own cell and interfering signals from mobile units in adjacent cells. Based on received signal strength mobile units are instructed to change their transmission power.

It is an object of the present invention to provide a universal wireless communication system of the above kind making an efficient use of the available frequency spectrum while at the same time operating the wireless communication stations in an economic way as regards power consumption.

To this end the system according to the present invention is characterised in that, for operating the wireless communication system up to the limits of spectral band while at the same time allowing wireless communication stations to operate such that minimal power consumption is obtained under acceptable transmission conditions, the one radio base station comprises means for measuring whether the wireless communication station of the other wireless subsystem is causing adjacent channel interference in a channel of the one wireless subsystem, and means for issuing a command to the wireless communication station of the other wireless subsystem for adapting a spectral transmission characteristic of the wireless communication station in accordance with said adjacent channel interference measurements, and in that in at least one other wireless subsystem at least one wireless communication station comprises means for processing the command as issued from said radio base station and for adjusting the spectral transmission characteristic of the wireless communication station from a first to a second characteristic in accordance with the command. The present invention is based upon the insight that individual control of the spectral transmission spectrum of an interfering wireless communication station in one subsystem by a system resource of another subsystem achieves a better overall interference control in the system and achieves better overall power saving in the wireless communication stations in the system than with an uncoordinated transmission spectrum shaping. Furthermore, such an interference bandwidth/energy adjustment does not affect the information bandwidth or other RF characteristic. In the event of a cellular and cordless radio system as subsystems such subsystems can use adjacent frequency bands while applying wide band CDMA or wide band TDMA carriers without any further mutual coordination between such subsystems beyond the issuing of the command when an interferer is recognized from a wireless communication station being operated in a neighbouring frequency band. Power consumption in a wireless communication system can typically be reduced when the wireless communication station is operated in a non-congested system. With the transmission protocol according to the present invention RF carriers can be packed densely so that the spectrum efficiency is improved.

In an embodiment of a universal wireless communication system according to the present invention, the wireless communication station comprises means for transmitting a code at regular intervals, in particular a training sequence or like signal replacing a known training sequence at regular intervals, and in the radio base station the means for identifying the wireless communication station are arranged for identifying the wireless communication station from the code. Herewith interfering wireless communication stations can be identified easily after having been powered-up and can be commanded to adjust their transmission spectrum immediately according to the interference conditions in the system.

In an embodiment of a universal wireless communication system according to the present invention, the means for measuring are arranged for interference measurements on the basis of energy to bit error measurements, and the command being an instruction for narrowing the identified interfering transmit spectrum if the interference is not acceptable and being an instruction for allowing to broaden the transmit spectrum if the interference is acceptable. By measuring the signal energy in different parts of the spectrum, i.e., in the interfered channel and outside the interfered channel, it can be determined whether or not there is an interference condition and the interferer can be identified. Preferably a characteristic of a bit-error-rate versus received signal energy for a non-interfered channel can be stored in a lookup table. Then it can be easily determined from the actually measured energy and error characteristics whether or not an interference condition is present, a higher measured energy than an energy corresponding to a given bit-error-rate error characteristic, such as indicating that interference is present.

In an embodiment of a universal wireless communication system according to the present invention, the means for adjusting the spectral transmission characteristic are arranged for adjusting the spectral transmission characteristic of the wireless communication station by adjusting a modulation type and/or by modifying the linearity of a power amplifier and/or by adjusting transmit signal processing characteristics, and/or adjusting transmit power filter characteristics. Although preferably the spectral transmission characteristic is adjusted by adjusting the transmit filter characteristic, because of the fact that a lot of power is saved when operating the wireless communication station while using a less complex filter which results in a broad transmit spectrum, preferably a digital filter, under non-interference conditions, as compared to a more complex filter which narrows the spectrum under interference conditions, broadening or narrowing of the spectrum can also be done by other means, whether or not in combination with using an adjustable filter means.

In a preferred embodiment of a universal wireless communication system according to the present invention, the means for issuing a command are arranged for issuing the command via a common control channel of the system. Such a control channel can control all subsystems within the system, or a subset of subsystems within the systems, or the like, and can be a prioritized control channel. Such a control channel is thus used as an inter-subsystem control channel. In particular the interfering wireless communication station is recognised by the identifying code it is transmitting with the mechanisms described earlier.

In another embodiment of a universal wireless communication system according to the present invention, the means for issuing a command are arranged for issuing the command via a network comprised in the system to which the first and the second wireless subsystem are coupled. Although in this embodiment no spectral resources are used for the inter-subsystem control channel so that the spectral efficiency is somewhat better than in the preferred embodiment, it could be the case that operators of different subsystems would not allow such an inter-operability.

The present invention will now be described, by way of example, with reference to the accompanying drawings, wherein
Fig. 1 schematically shows a universal wireless communication system according to the present invention,
Fig. 2 shows an available frequency spectrum for the universal wireless communication system,
Fig. 3 shows interference control according to the present invention,
Fig. 4 shows a block diagram of a radio base station for use in the universal wireless communication system according to the present invention,
Fig. 5 shows a characteristic of a bit-error-rate versus energy,
Fig. 6 shows FFT windows around a desired channel, and
Fig. 7 shows a block diagram of a wireless communication station for use in the universal wireless communication system according to the present invention.

Throughout the figures the same reference numerals are used for the same features.

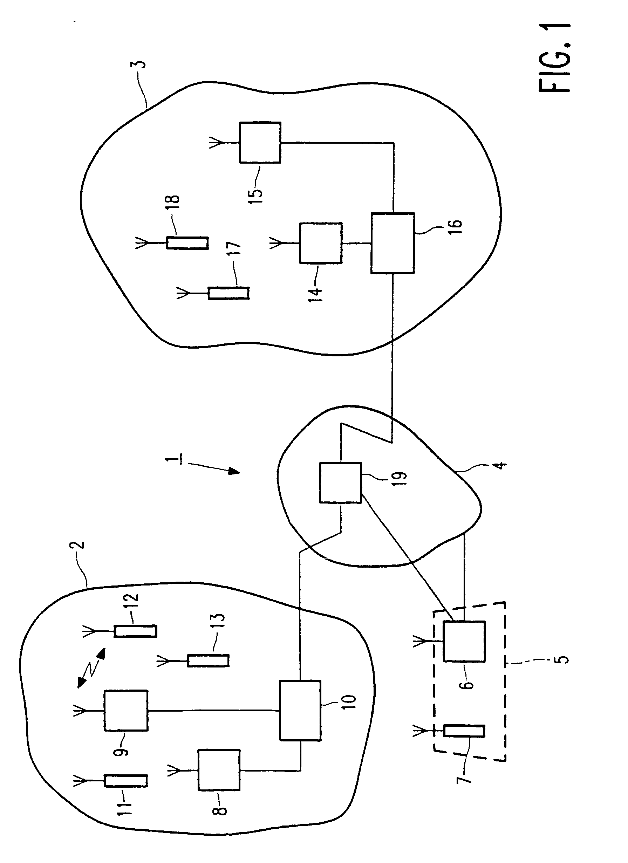

Fig. 1 schematically shows a universal wireless communication system 1 according to the present invention comprising a first wireless subsystem 2 and a second wireless subsystem 3 which can be digital cellular systems of a first and a second operator, the subsystems 2 and 3 being coupled to the public switched telephone network 4. Generally coupling the subsystems 2 and 3 can be done by any network and connection means. The system 1 further comprises a third wireless subsystem 5 which can be a cordless telephone system of which a radio base station 6 with a corresponding handset 7 are shown. The first subsystem 2 comprises radio base stations 8 and 9 coupled to the public network 4 via a mobile switching centre 10, and a plurality of wireless communication stations 11, 12 and 13. The second subsystem 3 comprises radio base stations 14 and 15 coupled to the switched network 4 via a mobile switching centre 16, and a plurality of wireless communication stations 17 and 18. The subsystems 2, 3 and 4 at least partly geographically overlap. Further shown is a coupling device 19 comprised in the network 4 for coupling the subsystems 2, 3 and 5 and for exchanging information between the subsystems 2, 3 and 5. In one embodiment according to the present invention a command from a radio base station in one of the subsystems 2, 3 and 5 is conveyed to a wireless communication station or handset of another one of the subsystems for instructing the wireless communication station or handset to adjust its spectral transmission characteristic from a first to a second characteristic. In an example, if interference is detected by said radio base station in said one subsystem from said wireless communication station or handset in said other subsystem, in a given channel, the transmission characteristic is adjusted such that a relatively narrow transmission spectrum is obtained, and if no interference is detected the transmission characteristic is adjusted such that a relatively broad spectrum is obtained. The interfering wireless communication or handset is recognised by the radio basestation detecting interference from a code transmitted by the wireless communication station or handset at regular points in time, e.g., by replacing from time to time the training sequence which is transmitted with each message by the code. In another, preferred embodiment, the command from the interfered base station is transmitted via the air interface in a control channel which can be global to the system or to a subset of subsystems. Further subsystems such as satellite systems can be included in the system 1.

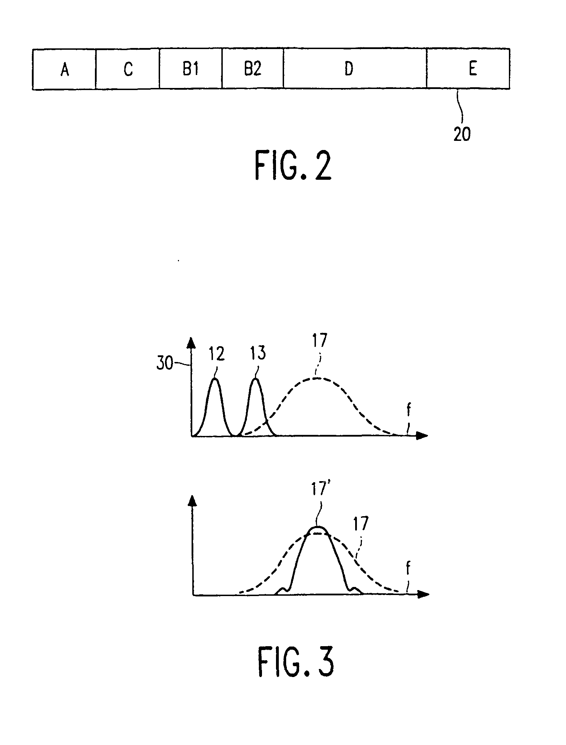

Fig. 2 shows an available frequency spectrum 20 for the universal wireless communication system 1 as allocated by Frequency Allocating Authorities comprising a frequency band A for the cordless subsystem 5, frequency band B1 and B2 for public digital cellular radio subsystems 2 and 3, and further a frequency band C for a private universal wireless communication subsystem (not shown), a frequency D for a universal wireless communication satellite subsystem (not shown), and a terrestrial band E comprising a subband of global control channels for exchanging the command according to the present invention inter alia. The subsystems can be implemented according to any one of available transmission schemes such as FDMA, TDMA, CDMA, ATM, or a combination thereof, any other transmission scheme. Any carrier spacing can be used from wideband carriers to small band carriers or any combination thereof.
Fig. 3 shows interference control according to the present invention. Shown is the energy density frequency spectrum 30 showing channels of the wireless communication stations 12 and 13 in the subsystem 2 and an interfering channel of the wireless communication station 17 in the subsystem 3. The radio base station 9 is in radio communication with the wireless communication stations 12 and 13, and the radio base station 14 is in radio communication with the wireless communication station 17. If in the given example the radio base station 9 detects that the wireless communication station 17 causes adjacent channel interference in the channel 13 it transmits a command to the wireless communication station 17 via one of the global control channels so as to instruct the wireless communication station 17 to narrow its transmit frequency spectrum. If no interference is detected the wireless communication station is allowed to broaden its transmit frequency spectrum. These operations are preferably done by adjusting the transmit spectrum applying a less complex transmit filter so as to save considerable power in no interference is detected and applying a more complex transmit filter if interference is detected, but can be done by other means as described in the introduction of the present application. Instead of a two steps adjustment, the adjustment can be done in more than two steps, depending on the level of detected adjacent channel interference, the filter complexity increasing with an increased level of detected interference. Preferably the filter is a digital filter implemented in a digital signal processor, complexity then being expressed in the number of full additions per sample, for example.

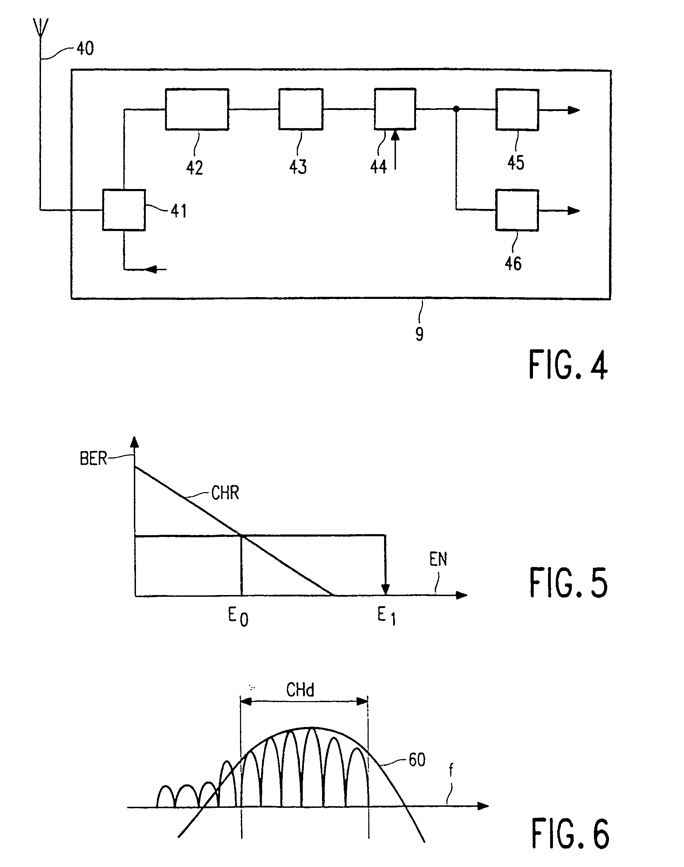

Fig. 4 shows a block diagram of the radio base station 9 for use in the universal wireless communication system 1 according to the present invention. The radio base station 9 comprises an antenna 40, a receive/transmit switch 41, and a reception branch comprising a radio frontend 42, a frequency selective filter 43, a sampler 44, and a demodulator 45 providing a demodulated bitstream. The radio base station 9 further comprises a transmit branch (not shown in detail) and a digital signal processor 46 processing samples from the sampler 44. Other usual functionality such as frequency synthesises and channel selection is not shown in detail. The digital signal processor 46 is arranged for carrying out Fast Fourier Transforms inter alia and comprises ROM and RAM memory (not shown).
Fig. 5 shows an error characteristic CHR of a bit-error-rate BER versus energy EN. Such a charactistic shows a well-known relationship for a bit-error-rate versus energy for a non-interfered channel for a known signal type and receiver structure. This characteristic is stored in a lookup table in the ROM of the digital signal processor 46.
Fig. 6 shows frequency spectrum windows around a desired channel Chd, the windows being obtained after Fourier Transform of the samples generated by the sampler 44 and a solid line 60 indicating the Fourier Transform of the desired signal in the desired channel Chd. From the difference of measured energy and the desired energy in the frequency domain the radio base station 9 determines whether there is interference and then determines from the received code from the interfering wireless communication station 17 its identity and commands the wireless communication station 17 accordingly. Interference is present if in the channel adjacent to the desired channel the received energy is higher than the expected received energy at a given bit-error-rate, the relationship between the expected received energy and the bit-error rate for a non-interfered channel being stored in the lookup table.

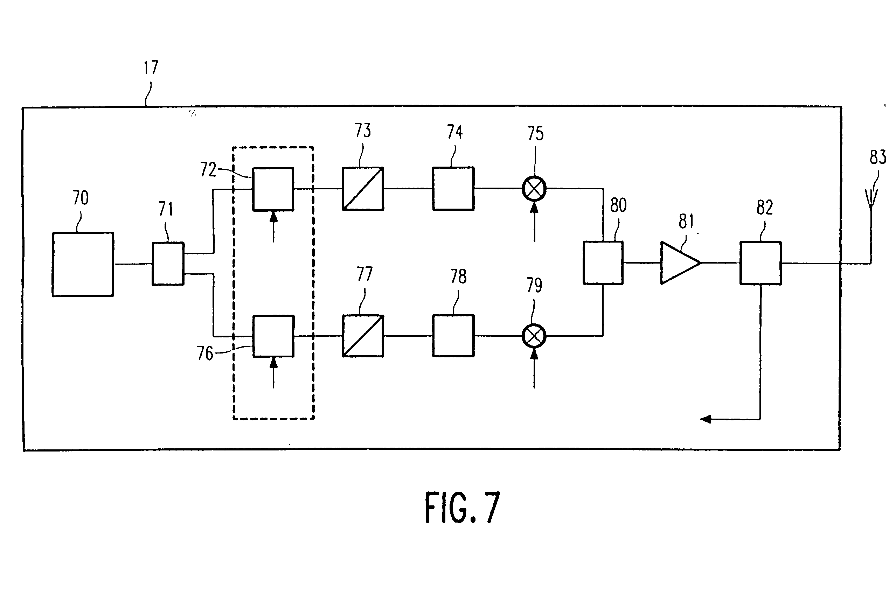

Fig. 7 shows a block diagram of the wireless communication station 17 for use in the universal wireless communication system 1 according to the present invention. The station 17 comprises a data processing unit 70 providing a data stream to be modulated, a channel coding unit 71 providing channel coded bitstreams to quadrature branches of the transmitter branch of the wireless communication station 17. The quadrature branches comprise a sampled digital filter 72, a digital-to-analog converter 73, an anti-aliasing filter 74, a carrier modulator 74, and a sampled digital filter 76, a digital-to-analog converter 77, an anti-aliasing filter 78, and a carrier modulator 79, respectively. Output signals of the quadrature branches are fed to a summing arrangement 80 which is coupled to a transmit power amplier 81 which is coupled to a receive/transmit switch 82 which is coupled to an antenna 83. The wireless communication station 17 further comprises a receive branch (not shown in detail).

So there is provided a mechanism for commanding wireless communication stations to adjust their spectral transmission characteristic in accordance with the measured interference caused by the wireless communication stations in base stations. Herewith the operators of neighbouring frequency bands can use their frequency bands up to the band edges. Private subsystems are operated in an uncoordinated way within the available band, or a band is used as a common band for a plurality of subsystems. The carrier bandwidths and timing structures within the bands are different and driven by the unpredictable demand rather than by frequency band planning. In view of the foregoing it will be evident to a person skilled in the art that various modifications may be made within the spirit and the scope of the present invention as hereinafter defined by the appended claims and the present invention is thus not limited to the examples provided.

## Claims

1. A universal wireless communication system in which an available radio frequency spectrum is divided among at least a first and a second wireless subsystem, the first wireless subsystem comprising at least a first radio base station and a first plurality of wireless communication stations, and the second wireless subsystem comprising at least a second radio base station and a second plurality of wireless communication stations, in at least one wireless subsystem one radio base station comprising
- means (45) for identifying a wireless communication station of another wireless subsystem,
**characterised in that**, for operating the wireless communication system up to the limits of spectral band while at the same time allowing wireless communication stations to operate such that minimal power consumption is obtained under acceptable transmission conditions, the one radio base station comprises
- means (42,43,44) for measuring whether the wireless communication station of the other wireless subsystem is causing adjacent channel interference in a channel of the one wireless subsystem, and
- means (46) for issuing a command to the wireless communication station of the other wireless subsystem for adapting a spectral transmission characteristic of the wireless communication station in accordance with said adjacent channel interference measurements, and **in that** in at least one other wireless subsystem at least one wireless communication station comprises
- means (70,71,72,74,75,76,78,79) for processing the command as issued from said radio base station and for adjusting the spectral transmission characteristic of the wireless communication station from a first to a second characteristic in accordance with the command.

2. A universal wireless communication system according to claim 1, wherein the wireless communication station comprises means for transmitting a code at regular intervals, in particular a training sequence or like signal replacing a known training sequence at regular intervals, and
in the radio base station the means for identifying the wireless communication station are arranged for identifying the wireless communication station from the code.

3. A universal wireless communication system according to claims 1 or 2, wherein the means for measuring are arranged for determining whether there is interference in the channel of the one wireless subsystem, and the means for identifying are arranged for, if interference is determined, determining the identity of the interfering wireless communication station.

4. A universal wireless communication system according to claim 3, wherein the means for measuring are arranged for interference measurements on the basis of energy to bit error measurements, and the command being an instruction for narrowing the identified interfering transmit spectrum if the interference is not acceptable and being an instruction for allowing to broaden the transmit spectrum if the interference is acceptable.

5. A universal wireless communication system according to claims 1, 2, 3 or 4, wherein the means for adjusting the spectral transmission characteristic are arranged for adjusting the spectral transmission characteristic of the wireless communication station by adjusting a modulation type and/or by modifying the linearity of a power amplifier and/or by adjusting transmit signal processing characteristics, and/or adjusting transmit power filter characteristics.

6. A universal wireless communication system according to any one of the preceding claims, wherein the means for issuing a command are arranged for issuing the command via a common control channel of the system.

7. A universal wireless communication system according to any one of the claims 1 to 6, wherein the means for issuing a command are arranged for issuing the command via a network comprised in the system to which the first and the second wireless subsystem are coupled.

8. A transmission method for a universal wireless communication system in which an available radio frequency spectrum is divided among at least a first and a second wireless subsystem, the first wireless subsystem comprising at least a first radio base station and a first plurality of wireless communication stations, and the second wireless subsystem comprising at least a second radio base station and a second plurality of wireless communication stations, the transmission method comprising the step of, in one radio base station of one of the wireless subsystems, identifying a wireless communication station of another wireless subsystem, **characterized in that**, for operating the wireless communication system up to the limits of spectral band while at the same time allowing wireless communication stations to operate such that minimal power consumption is obtained under acceptable transmission conditions, the transmission method comprises the following steps:
a) measuring in the one radio base station whether the wireless communication station of the other wireless subsystem is causing adjacent channel interference in a channel of the one wireless subsystem,
b) in the radio base station of the one wireless subsystem issuing a command to the wireless communication station of the other wireless subsystem for adapting the spectral transmission characteristic of the wireless communication station in accordance with the determined interference situation, and
c) in the identified wireless communication station adjusting the spectral transmission characteristic of the wireless communication station from a first to a second characteristic in accordance with the command.

9. A wireless communication station in a wireless subsystem in a system according to any one of the claims 1 to 8, **characterized in that** the wireless communication station comprises means (70,71,72,74,75,76,78,79) for processing a command for adapting a spectral transmission characteristic in accordance with measurements an adjacent channel interference between two wireless subsystems as issued from said radio base station of another wireless subsystem and means for adapting the spectral transmission characteristic of the wireless communication station from a first to a second characteristic in accordance with the command.

10. A radio base station for use in one wireless subsystem of a universal wireless communication system according to any one of the claims 1 to 8, the radio base station comprising means (45) for identifying a wireless communication station of another wireless subsystem, **characterized in that** the radio base station comprises
- means (42,43,44) for measuring whether the wireless communication station of the other wireless subsystem is causing adj acent channel interference in a channel of the one wireless subsystem, and
- means (46) for issuing a command to the wireless communication station of the other wireless subsystem for adapting the spectral transmission characteristic of the wireless communication station in accordance to said adjacent channel interference measurements.

## Patentansprüche

1. Universelles drahtloses Kommunikationssystem, wobei ein verfügbares Funkfrequenzspektrum über wenigstens ein erstes und ein zweites drahtloses Subsystem verteilt wird, wobei das erste drahtlose Subsystem wenigstens eine erste Funkbasisstation und eine erste Anzahl drahtloser Kommunikationsstationen aufweist, und wobei das zweite drahtlose Subsystem wenigstens eine zweite Funkbasisstation und eine zweite Anzahl drahtloser Kommunikationsstationen aufweist, wobei in wenigstens einem drahtlosen Subsystem eine Funkbasisstation die folgenden Elemente umfasst:
- Mittel (45) zum Identifizieren einer drahtlosen Kommunikationsstation eines anderen drahtlosen Subsystems,
**dadurch gekennzeichnet, dass** zum Betreiben des drahtlosen Kommunikationssystems bis an die Grenzen des spektralen Bandes, während gleichzeitig ermöglicht wird, dass drahtlose Kommunikationsstationen derart funktionieren, dass unter akzeptierbaren Übertragungsbedingungen ein minimaler Energieverbrauch erhalten wird, die eine Funkbasisstation die nachfolgenden Elemente umfasst:
- Mittel (42, 43, 44) um zu messen, ob die drahtlose Kommunikationsstation des anderen drahtlosen Subsystems Nachbarkanalinterferenz in einem Kanal des einen drahtlosen Subsystems verursacht, und
- Mittel (46) zum Ausliefern eines Befehls zu der drahtlosen Kommunikationsstation des anderen drahtlosen Subsystems zum Anpassen einer spektralen Übertragungscharakteristik der drahtlosen Kommunikationsstation entsprechend den genannten Nachbarkanalinterferenzmessungen, und dass in wenigstens einem anderen drahtlosen Subsystem wenigstens eine drahtlose Kommunikationsstation Folgendes umfasst:
- Mittel (70, 71, 72, 74, 75, 76, 78, 79) zum Verarbeiten des Befehls, wie dieser von der genannten Funkstation ausgegeben wurde, und zum Einstellen der spektralen Übertragungscharakteristik der drahtlosen Kommunikationsstation von einer ersten zu einer zweiten Charakteristik entsprechend dem Befehl.

2. universelles drahtloses Kommunikationssystem nach Anspruch 1, wobei die drahtlose Kommunikationsstation Mittel aufweist zum Übertragen eines Codes zu regelmäßigen Intervallen, insbesondere einer Trainingsequenz oder eines ähnlichen Signals, das eine bekannte Trainingsequenz zu regelmäßigen Zeitintervallen ersetzt, und wobei in der Funkstation die Mittel zum Identifizieren der drahtlosen Kommunikationsstation vorgesehen sind zum Identifizieren der drahtlosen Kommunikationsstation aus dem Code.

3. Universelles drahtloses Kommunikationssystem nach Anspruch 1 oder 2, wobei die Mittel zum Messen vorgesehen sind um zu ermitteln, ob es in dem Kanal des einen drahtlosen Subsystems Interferenz gibt, und wobei die Mittel zum Identifizieren dazu vorgesehen sind, um, wenn Interferenz ermittelt wird, die Identität der störenden drahtlosen Kommunikationsstation zu ermitteln.

4. Universelles drahtloses Kommunikationssystem nach Anspruch 3, wobei die Mittel zum Messen für Messungen auf Basis von Energie-zu-Bitfehlermessungen vorgesehen sind, und wobei der Befehl eine Instruktion zum Verengen des identifizierten störenden Übertragungsspektrums ist, wenn die Interferenz nicht akzeptierbar ist, und eine Instruktion zum Gestatten einer Verbreiterung des Übertragungsspektrums ist, wenn die Interferenz akzeptierbar ist.

5. Universelles drahtloses Kommunikationssystem nach Anspruch 1, 2, 3 oder 4, wobei die Mittel zum Einstellen der spektralen Übertragungscharakteristik zum Einstellen der spektralen Übertragungscharakteristik der drahtlosen Kommunikationsstation vorgesehen sind, und zwar **dadurch**, dass ein Modulationstyp eingestellt wird und/oder dass die Linearität eines Leistungsverstärkers modifiziert wird, und/oder das die Übertragungssignalverarbeitungscharakteristiken eingestellt werden, und/oder dass die Übertragungsleistungsfiltercharakteristiken eingestellt werden.

6. Universelles drahtloses Kommunikationssystem nach einem der vorstehenden Ansprüche, wobei die Mittel zum Liefern eines Befehls dazu vorgesehen sind, den Befehl über einen Kommunikationssteuerkanal des Systems zu liefern.

7. Universelles drahtloses Kommunikationssystem nach einem der Ansprüche 1 bis 6, wobei die Mittel zum Liefern eines Befehls dazu vorgesehen sind, den Befehl über ein in dem System vorgesehenes Netzwerk zu liefern, wobei mit diesem Netzwerk das erste und das zweite drahtlose Subsystem gekoppelt sind.

8. Übertragungsverfahren für ein universelles drahtloses Kommunikationssystem, wobei ein verfügbares Funkfrequenzspektrum über wenigstens ein erstes und ein zweites drahtloses Subsystem verteilt wird, wobei das erste drahtlose Subsystem wenigstens eine erste Funkbasisstation und eine erste Anzahl drahtloser Kommunikationsstationen aufweist, und wobei das zweite drahtlose Subsystem wenigstens eine zweite Funkbasisstation und eine zweite Anzahl drahtloser Kommunikationsstationen aufweist, wobei das Übertragungsverfahren den nachfolgenden Verfahrensschritt umfasst: in einer Funkbasisstation eines der drahtlosen Subsysteme das Identifizieren einer drahtlosen Kommunikationsstation eines anderen drahtlosen Subsystems, **dadurch gekennzeichnet, dass** zum betreiben des drahtlosen Kommunikationssystems bis an die Grenzen des Spektralbandes, während gleichzeitig erlaubt wird, dass drahtlose Kommunikationsstationen derart funktionieren, dass unter akzeptierbaren Übertragungsumständen ein minimaler Energieverbrauch erhalten wird, wobei das Übertragungsverfahren die nachfolgenden Verfahrensschritte umfasst:
a) das Messen in der einen Funkbasisstation, ob die drahtlose Kommunikationsstation des anderen drahtlosen Subsystems Nachbarkanalinterferenz in einem Kanal des eines drahtlosen Subsystems verursacht,
b) in der Funkbasisstation des einen drahtlosen Subsystems das Ausliefern eines Befehls zu der drahtlosen Kommunikationsstation des anderen drahtlosen Subsystems zum Anpassen der spektralen Übertragungscharakteristik der drahtlosen Kommunikationsstation entsprechend der bestimmten Interferenzsituation, und
c) in der identifizierten drahtlosen Kommunikationsstation das Einstellen der spektralen Übertragungscharakteristik der drahtlosen Kommunikationsstation von der ersten zu einer zweiten Charakteristik entsprechend dem Befehl.

9. Drahtlose Kommunikationsstation in einem drahtlosen Subsystem in einem System nach einem der Ansprüche 1 bis 8, **dadurch gekennzeichnet, dass** die drahtlose Kommunikationsstation Mittel (70, 71, 72, 74, 75, 76, 78, 79) zum Verarbeiten eines Befehls zum Anpassen einer spektralen Übertragungscharakteristik entsprechend den Messungen an Nachbarkanalinterferenz zwischen zwei drahtlosen Subsystemen aufweist.

10. Funkbasisstation zur Verwendung in einem drahtlosen Subsystem eines universellen drahtlosen Kommunikationssystems nach einem der Ansprüche 1 bis 8, wobei die Funkbasisstation Mittel (45) aufweist zum Identifizieren einer drahtlosen Kommunikationsstation eines anderen drahtlosen Subsystems,
**dadurch gekennzeichnet, dass** die Funkbasisstation die nachfolgenden Elemente aufweist:
- Mittel (42, 43, 44) um zu messen, ob die drahtlose Kommunikationsstation des anderen drahtlosen Subsystems Nachbarkanalinterferenz in einem Kanal des einen drahtlosen Subsystems verursacht, und
- Mittel (46) zum Ausliefern eines Befehls zu der drahtlosen Kommunikationsstation des anderen drahtlosen Subsystems zum Anpassen der spektralen Übertragungscharakteristik der drahtlosen Kommunikationsstation entsprechend den genannten Nachbarkanalinterferenzmessungen.

## Revendications

1. Système de communication sans fil universel dans lequel un spectre de fréquences radio disponible est divisé entre au moins un premier et un second sous-système sans fil, le premier sous-système sans fil comprenant au moins une première station de base radio et une première pluralité de stations de communication sans fil, et le second sous-système sans fil comprenant au moins une seconde station de base radio et une seconde pluralité de stations de communication sans fil, une station de base radio comprenant, dans au moins un sous-système sans fil :
- des moyens (45) pour identifier une station de communication sans fil d'un autre sous-système sans fil,
**caractérisé en ce que**, pour exploiter le système de communication sans fil jusqu'aux limites de la bande de spectre tout en permettant en même temps aux stations de communication sans fil de fonctionner d'une manière telle qu'une consommation d'énergie minimale soit obtenue dans des conditions de transmission acceptables, la station de base radio comprend
- des moyens (42, 43, 44) pour mesurer si la station de communication sans fil de l'autre sous-système sans fil provoque de l'interférence dans un canal adjacent du sous-système sans fil, et
- des moyens (46) pour envoyer une commande à la station de communication sans fil de l'autre sous-système sans fil pour adapter une caractéristique d'émission spectrale de la station de communication sans fil conformément auxdites mesures d'interférence due au canal adjacent, et **en ce que** dans au moins un autre sous-système sans fil, au moins une station de communication sans fil comprend
- des moyens (70, 71, 72, 74, 75, 76, 78, 79) pour traiter la commande telle qu'envoyée à partir de ladite station de base radio et pour régler la caractéristique d'émission spectrale de la station de communication sans fil à partir d'une première vers une seconde caractéristique conformément à la commande.

2. Système de communication sans fil universel selon la revendication 1, dans lequel la station de communication sans fil comprend des moyens pour transmettre un code à intervalles réguliers, en particulier une séquence d'apprentissage ou un signal du même genre qui remplace une séquence apprentissage connue à intervalles réguliers, et dans la station de base radio, les moyens pour identifier la station de communication sans fil sont agencés pour identifier la station de communication sans fil à partir du code.

3. Système de communication sans fil universel selon la revendication 1 ou 2, dans lequel les moyens de mesure sont agencés pour déterminer si de l'interférence est présente dans le canal du sous-système sans fil, et les moyens d'identification sont agencés pour, si l'on a déterminé de l'interférence, déterminer l'identité de la station de communication sans fil responsable de l'interférence.

4. Système de communication sans fil universel selon la revendication 3, dans lequel les moyens de mesure sont agencés pour réaliser des mesures d'interférence sur la base de mesures d'énergie en fonction des erreurs sur les bits, et la commande est un ordre pour rétrécir le spectre d'émission provoquant de l'interférence identifié si l'interférence n'est pas acceptable, et est un ordre pour permettre l'élargissement du spectre d'émission si l'interférence est acceptable.

5. Système de communication sans fil universel selon la revendication 1, 2, 3 ou 4, dans lequel les moyens pour régler la caractéristique d'émission spectrale sont agencés pour régler la caractéristique d'émission spectrale de la station de communication sans fil en réglant un type de modulation et/ou en modifiant la linéarité d'un amplificateur de puissance, et/ou en réglant les caractéristiques de traitement du signal d'émission, et/ou en réglant les caractéristiques du filtre de puissance d'émission.

6. Système de communication sans fil universel selon l'une quelconque des revendications précédentes, dans lequel les moyens pour envoyer une commande sont agencés pour envoyer la commande par le biais d'un canal de contrôle commun du système.

7. Système de communication sans fil universel selon l'une quelconque des revendications 1 à 6, dans lequel les moyens pour envoyer une commande sont agencés pour envoyer la commande par le biais d'un réseau compris dans le système, auquel le premier et le second sous-systèmes sans fil sont connectés.

8. Procédé de transmission pour un système de communication sans fil universel dans lequel un spectre de fréquences radio disponible est divisé entre au moins un premier et un second sous-système sans fil, le premier sous-système sans fil comprenant au moins une première station de base radio et une première pluralité de stations de communication sans fil, et le second sous-système sans fil comprenant au moins une seconde station de base radio et une seconde pluralité de stations de communication sans fil, le procédé de transmission comprenant l'étape, dans une station de base radio de l'un des sous-systèmes sans fil, d'identifier une station de communication sans fil d'un autre sous-système sans fil, **caractérisé en ce que**, pour exploiter le système de communication sans fil jusqu'aux limites de la bande de spectre tout en permettant en même temps aux stations de communication sans fil de fonctionner d'une manière telle qu'une consommation d'énergie minimale soit obtenue dans des conditions de transmission acceptables, le procédé de transmission comprend les étapes suivantes :
a) mesurer, dans la station de base radio, si la station de communication sans fil de l'autre sous-système sans fil provoque de l'interférence dans un canal adjacent du sous-système sans fil,
b) dans la station de base radio du sous-système sans fil, envoyer une commande à la station de communication sans fil de l'autre sous-système sans fil pour adapter la caractéristique d'émission spectrale de la station de communication sans fil conformément à la situation d'interférence déterminée, et
c) dans la station de communication sans fil identifiée, régler la caractéristique d'émission spectrale de la station de communication sans fil à partir d'une première vers une seconde caractéristique conformément à la commande.

9. Station de communication sans fil dans un sous-système sans fil d'un système selon l'une quelconque des revendications 1 à 8, **caractérisée en ce que** la station de communication sans fil comprend des moyens (70, 71, 72, 74, 75, 76, 78, 79) pour traiter une commande destinée à adapter une caractéristique d'émission spectrale conformément à des mesures d'interférence due au canal adjacent entre deux sous-systèmes sans fil telle qu'envoyée à partir de ladite station de base radio d'un autre sous-système sans fil, et des moyens pour adapter la caractéristique d'émission spectrale de la station de communication sans fil à partir d'une première vers une seconde caractéristique conformément à la commande.

10. Station de base radio destinée à être utilisée dans un sous-système sans fil d'un système de communication sans fil universel selon l'une quelconque des revendications 1 à 8, la station de base radio comprenant des moyens (45) pour identifier une station de communication sans fil d'un autre sous-système sans fil,
**caractérisée en ce que** la station de base radio comprend
- des moyens (42, 43, 44) pour mesurer si la station de communication sans fil de l'autre sous-système sans fil provoque de l'interférence dans un canal adjacent du sous-système sans fil, et
- des moyens (46) pour envoyer une commande à la station de communication sans fil de l'autre sous-système sans fil pour adapter la caractéristique d'émission spectrale de la station de communication sans fil conformément auxdites mesures d'interférence due au canal adjacent.
